# EUROPÄISCHE PATENTSCHRIFT

(11) **EP 1 989 658 B1**
(45) Veröffentlichungstag und Bekanntmachung des Hinweises auf die Patenterteilung: **20.10.2010**
(21) Anmeldenummer: 06818949.7
(22) Anmeldetag: 01.12.2006
(51) Int. Cl.: G06K 7/12

(54) **VERFAHREN ZUM MASCHINELLEN LESEN VON MARKIERUNGEN AN/AUF/IN TRANSPARENTEN MARKIERUNGSTRÄGERN**
METHOD FOR THE MACHINE-READING OF MARKINGS ON/IN TRANSPARENT MARKING CARRIERS
PROCÉDÉ POUR LIRE PAR MACHINE DES MARQUES SE TROUVANT SUR/DANS DES PORTE-MARQUES TRANSPARENTS

(30) Priorität: 02.12.2005 DE 102005057931
(43) Veröffentlichungstag der Anmeldung: 12.11.2008
(73) Patentinhaber: boraident GmbH, 06118 Halle/Saale (DE)
(72) Erfinder: RAINER, Thomas, 38855 Wernigerode (DE); BOREK, Reinhard, 06110 Halle (DE)
(74) Vertreter: COHAUSZ DAWIDOWICZ HANNIG & SOZIEN
(86) Internationale Anmeldenummer: PCT/EP2006/011551
(87) Internationale Veröffentlichungsnummer: WO 2007/062861

(56) Entgegenhaltungen:
- WO-A-98/01817
- WO-A-99/08221
- DE-A1- 19 952 195

## Beschreibung

Die Erfindung betrifft ein Verfahren und eine Vorrichtung zum maschinellen Lesen von Markierungen auf/an/in transparenten, insbesondere scheibenförmigen Markierungsträgern, insbesondere Glasscheiben.

Im Stand der Technik ist es bekannt, transparente Objekte, beispielsweise scheibenförmige Objekte und hier insbesondere Glasscheiben, mit Markierungen zu versehen. Derartige Markierungen können z.B. dazu dienen, den Hersteller einer Scheibe zu identifizieren oder sie können eine Prüfmarkierung, beispielsweise für ein spezielles Glasherstellungsverfahren oder Behandlungsverfahren, wie z.B. bei der Herstellung von Einscheibensicherheitsglas darstellen. Weiterhin kann eine Markierung auf, an oder in transparenten Objekten jede sonstige Bedeutung haben.

Ein derartiges transparentes Objekt, welches neben den typischerweise vorgesehenen Glasscheiben auch beliebige andere Formgestaltungen transparenter Materialien umfasst, kann anhand des Vorhandenseins einer Markierung somit beispielsweise einer Überprüfung unterzogen werden.

Hierbei tritt das Problem auf, dass Markierungen auf, an oder in transparenten Markierungsträgern aufgrund der Transparenz des Markierungsträgers schwer erkennbar sind, wobei die Erkennbarkeit auch von der Existenz eines geeigneten Hintergrundes abhängig sein kann. Hierbei ist die Erkennbarkeit der Markierung in einem transparenten Markierungsträger selbst dann schwierig, wenn die eigentliche Markierung eine ausreichende Färbung aufweist, also beispielsweise maximal schwarz ist.

Das Problem der Erkennbarkeit von Markierungen an, auf oder in transparenten Markierungsträgern ist somit im Wesentlichen abhängig von der Realisierung eines geeigneten ausreichenden Kontrastes zwischen der Markierung und einem Hintergrund der Markierung.

Wegen dieser Schwierigkeiten gibt es derzeit keine zufrieden stellenden Verfahren oder Vorrichtungen, um eine maschinelle Identifizierung bzw. ein maschinelles Lesen einer Markierung in einem transparenten Markierungsträger mit genügender Zuverlässigkeit zu erreichen und somit industrielle Fertigungsprozesse oder Behandlungsprozesse zu überprüfen.

Die vorgenannten Schwierigkeiten ergeben sich insbesondere dann, wenn die Markierung maschinencodierte Informationen enthält, deren korrekte Entschlüsselung maßgeblich für die Steuerung eines Fertigungs- oder Behandlungsprozesses ist. So kann es sich beispielsweise bei Markierungen um Barcode oder Datamatrix-Code handeln.

Ein Verfahren zum maschinellen Lesen von Markierungen ist z.B. aus den Veröffentlichungen WO 99/08221 und WO 98(01817 bekannt, wobei bei beiden Verfahren stark UV-Licht absorbierende und fluoreszierende Markierungen vorausgesetzt werden.

Besonders problematisch wird eine maschinelle Erkennung von Markierungen dann, wenn eine Färbung oder eine Absorption einer Markierung schwach bzw. klein ist. Dies kann beispielsweise gewünscht sein, damit eine Markierung mit einem bloßen Auge nicht oder kaum erkennbar ist, um so zu vermeiden, dass eine Markierung als optisch störend empfunden wird. Dennoch soll eine derartige Markierung maschinenlesbar sein, um eine Überprüfung des entsprechenden Markierungsträgers möglich zu machen. So stellt dieser Fall der Markierung von Markierungsträgern mit einem schwachen Kontrast üblicherweise den häufigsten Fall von Markierungen bei transparenten Markierungsträgern dar.

Aufgabe der Erfindung ist es, ein Verfahren bereitzustellen, mit denen die Möglichkeit gegeben ist, Markierungen in transparenten Markierungsträgern jeglicher Art zuverlässig und schnell, insbesondere maschinell, zu lesen und insbesondere hierbei maschinencodierte Informationen aus der Markierung zu erhalten.

Diese Aufgabe wird gemäß der Erfindung gelöst durch ein Verfahren, bei dem die Markierungen aus lasererzeugten Mikrorissen und/oder Metallpartikeln/Metallionen im Volumen des Markierungsträgers gebildet sind und zumindest während der Dauer eines maschinellen Lese- und Erkennungsvorgangs, insbesondere mittels einer Beleuchtungsvorrichtung, der Kontrast zwischen der Markierung, und dem Markierungsträger durch Beleuchtung des Markierungsträgers mit UV-Licht erhöht wird.

Durchgeführt werden kann das erfindungsgemäße Verfahren mit einer Vorrichtung, die wenigstens eine Lesevorrichtung für in/an/auf einem Markierungsträger angeordnete Markierung aufweist und bei der wenigstens eine Befeuchtungsvorrichtung vorgesehen ist, um mittels UV-Lichtbestrahlung eines Markierungsträgers den Kontrast zwischen einer Markierung und dem umgebenden transparenten Markierungsträger zu erhöhen.

Der wesentliche erfindungsgemäße Gedanke bei dem vorgeschlagenen Verfahren beruht darauf, dass durch eine UV-Lichtbestrahlung der Kontrast zwischen einer Markierung aus den lasererzeugten Mikrorissen und/oder Metallpartikeln/Metallionen im Volumen des Markierungsträgers und dem umgebenden transparenten Material des Markierungsträgers erhöht werden kann. Im Wesentlichen beruht diese Kontraststeigerung darauf, dass durch die UV-Lichtbestrahlung des transparenten Markierungsträgers Fluoreszenzlicht erzeugt wird, wenn das Material des Markierungsträgers durch UV-Licht zu Fluoreszenz anregbar ist. Dies ist bei vielen transparenten Materialien der Fall, insbesondere bei Glas.

So ist es demnach gemäß dem Verfahren vorgesehen sein, zumindest während der Zeitdauer des maschinellen Lesens, gegebenenfalls auch kontinuierlich, eine Bestrahlung bzw. Beleuchtung des Markierungsträgers mit UV-Licht vorzunehmen, um so die erfindungsgemäße, zumindest zeitweise Kontraststeigerung zu erreichen, so dass während des Vorliegens dieser Kontraststeigerung ein zuverlässiges Lesen einer Markierung ermöglicht wird, insbesondere wobei nicht nur das Vorhandensein einer Markierung überprüfbar ist, sondern auch der Informationsgehalt einer Markierung erfasst werden kann.

In einer bevorzugten Ausgestaltung des erfindungsgemäßen Verfahrens kann es dabei vorgesehen sein, dass das UV-Licht über eine Fläche in den Markierungsträger eingekoppelt wird, die im Wesentlichen senkrecht angeordnet ist zu der Ebene, in der sich die Markierung in/an/auf dem Markierungsträger befindet. Insbesondere bei scheibenförmigen Markierungsträgern, wie beispielsweise Glasscheiben, kann es sich bei einer derartigen Fläche um eine Stirnseite handeln. Hierbei wird unter der Stirnseite eines scheibenförmigen Markierungsträgers eine schmale Seite verstanden, die sich im Wesentlichen durch die Dicke des scheibenförmigen Markierungsträgers ergibt und die die beiden großen dominierenden Scheibenflächen verbindet.

Durch die vorbeschriebene Art der Einkopplung von UV-Licht über eine Stirnseite kann sodann erreicht werden, dass das Material des Markierungsträgers zur Fluoreszenz angeregt wird, was insbesondere bei Glasscheiben der Fall ist, da diese insbesondere bei der Floatglasproduktion zumindest auf einer der Scheibenseiten einen hohen Zinnanteil aufweisen.

So kann bevorzugt mittels dem eingekoppelten UV-Licht das Material des Markierungsträgers in der Umgebung der Markierung zur Fluoreszenz angeregt werden, so dass eine nicht oder zumindest nur unwesentlich fluoreszierende Markierung sich dunkel von einem hell fluoreszierenden Hintergrund abhebt. So wird durch das über die Fluoreszenz hervorgerufene Eigenleuchten des Markierungsträgers eine Kontrasterhöhung zur Markierung erreicht.

Hierbei ist es besonders vorteilhaft, wenn der Ort der Einkopplung des UV-Lichtes von der Markierung einen Abstand aufweist, insbesondere der geringer ist als die Absorptionslänge des Materials des Markierungsträgers bei der verwendeten Wellenlänge des UV-Lichtes. Hierbei wird unter der Absorptionslänge diejenige Länge verstanden, nach der die Intensität des eingestrahlten UV-Lichtes auf 1/e des ursprünglichen Betrags abgefallen ist.

Durch diese Wahl wird erreicht, dass sich die durch die Einkopplung erzeugte Fluoreszenz hauptsächlich in der unmittelbaren Umgebung der Markierung ergibt. Aus diesem Grund ist es besonders vorteilhaft, wenn eine Markierung auf einem scheibenförmigen Markierungsträger randnah angeordnet ist, gegebenenfalls besonders bevorzugt in einer Ecke eines scheibenförmigen Markierungsträgers, da dann gegebenenfalls von zwei verschiedenen Stirnseiten eine Einkopplung des UV-Lichtes erfolgen kann.

Nach einer alternativen Ausgestaltung des Verfahrens kann es ebenso vorgesehen sein, dass das UV-Licht über eine Fläche in den Markierungsträger eingekoppelt wird, die im Wesentlichen parallel angeordnet ist zu der Ebene, in der sich die Markierung in/an/auf dem Markierungsträger befindet. Bei einer derartigen Fläche kann es sich beispielsweise um eine der beiden großen dominierenden Scheibenfläche eines scheibenförmigen Markierungsträgers, d.h. insbesondere einer Glasscheibe, handeln.

Bei einer Einkopplung des UV-Lichtes in eine derartige Scheibenfläche kann es erreicht werden, dass durch das UV-Licht das Material des Markierungsträgers zur Fluoreszenz angeregt wird, wobei es besonders bevorzugt vorgesehen ist, dies in einem Abstand zur Markierung durchzuführen, so dass die Umgebung der Markierung selbst nicht fluoresziert und die Markierung nur durch sich in dem Markierungsträger, insbesondere durch Totalreflektion ausbreitendes Fluoreszenzlicht, beleuchtet wird.

Hierbei kann eine Markierung aus lasererzeugten Mikrorissen und/oder Metallpartikeln/Metallionen eine Störstelle im bzw. am Markierungsträger darstellen, an der das Fluoreszenzlicht bei seiner Ausbreitung zwischen den Scheibenfläche aus dem Markierungsträger auskoppelt, so dass die Markierung hell auf dunklem Hintergrund erscheint. Eine solche Störstelle kann sich z.B. durch mechanische Zerstörung der Mikrorisse, Partikeleinlagerung oder auch durch Brechungsindexänderung ergeben. Auch hierdurch ergibt sich demnach die gewünschte Kontraststeigerung, so dass ein maschinelles Lesen einer derartigen Markierung, die im unbeleuchteten Fall kontrastschwach sein kann, möglich wird.

Bevorzugt kann es hierbei vorgesehen sein, dass der Ort der Einkopplung des UV-Lichtes von der Markierung einen Abstand aufweist, insbesondere der größer ist als die Absorptionslänge des Materials des Markierungsträgers bei der verwendeten Wellenlänge des UV-Lichtes. Hierdurch wird erreicht, dass in die Umgebung der Markierung kein UV-Licht gelangt, da dieses vorher genügend absorbiert wurde und somit eine Beleuchtung der Markierung nur durch das Fluoreszenzlicht erfolgen kann, welches sich im Wesentlichen ungehindert, insbesondere durch Totalreflektion, in dem scheibenförmigen Markierungsträger ausbreitet.

Diese Art der Kontraststeigerung gemäß der zweiten Alternative kann in äquivalenter Weise statt mit UV-Licht mit jedem anderen Licht erfolgen, also solches, welches keine Fluoreszenz bewirkt. Es wird so direkt das eingekoppelte Licht ohne den zwischengeschalteten Schritt der Fluoreszenzlichterzeugung eingesetzt, um eine Markierung zu beleuchten. Im wesentlichen kann das Licht an jeder Stelle einer beliebigen Fläche eines Markierungsträgers in diesen eingekoppelt werden, da es sich, insbesondere bei geringer Absorption durch Totalreflexion im Markierungsträger ausbreitet und so auch immer die Markierung erreicht, insbesondere wenn diese im Volumen des Markierungsträgers angeordnet ist.

Für beide vorgenannten Alternativen wird es dabei als besonders vorteilhaft empfunden, wenn während eines Lesevorgangs zumindest die Umgebung einer Markierung von Umgebungslicht abgeschirmt ist, wobei insbesondere die Abschirmung durch eine Lese- oder gegebenenfalls auch Beleuchtungsvorrichtung selbst erfolgen kann. Hierdurch wird verhindert, dass störendes Umgebungslicht kontrastmindernd beim Lesen der Markierung wirkt.

Insbesondere beim Einsatz des erfindungsgemäßen Verfahrens in Verbindung mit dem Lesen von Markierungen in Glasscheiben kann die Wellenlänge des UV-Lichtes im Bereich von 240 - 280 Nanometern gewählt werden. Dies ist deswegen besonders vorteilhaft, da Glas und insbesondere Floatglas bei dieser Wellenlänge eine besonders hohe Absorption und Fluoreszenzerscheinung zeigt aufgrund der vorhandenen Zinnionen.

Eingesetzt wird das erfindungsgemäße Verfahren bei einer Markierung im Volumen eines Markierungsträgers, wobei eine derartige Markierung gebildet ist durch lasererzeugte Mikrorisse und/oder Metallpartikel/Metallionen und hier insbesondere Silberpartikel/Silberionen.

Ein Verfahren zur Durchführung einer derartigen Metallpartikelmarkierung im Volumen eines Markierungsträgers kann z.B, bei der Anwendung mit Glas dadurch gegeben sein, dass ein Metallionen enthaltendes Spendermedium auf die Glasoberfläche aufgetragen und sodann mit einem Laserstrahl beleuchtet wird.

Aufgrund des laserinduzierten Wärmeeintrags in das Glas kann es zu einer Diffusion von Metallionen in das Glas und aufgrund des Vorhandenseins weiterer Ionen im Glas, z.B. der Zinnionen, zu einer Reduktion und Partikelbildung kommen. Durch ein Schreiben auf einer vorbestimmten Trajektorie mittels des Laserstrahls kann somit eine der Trajektorie entsprechende Markierung in das Glas eingeschrieben werden, ggfs. auch im gepulsten Laserbetrieb.

Insbesondere wenn ein Spendermedium, beispielsweise eine Folie, verwendet wird, in der Silberionen vorhanden sind, können so silberpartikelhaltige und/oder silberionenhaltige Markierungen in einem Glas erzeugt werden.

Gerade für die vorgenannte Art der Markierung durch Eintrag von Silberionen in das Volumen von Glas, insbesondere von der Zinnbadseite des Glases aus werden Markierungen erzeugt, die sehr kontrastschwach sind und z.B. nur eine lokale Brechnungsindexänderung bewirken, so dass sich für diese Art der Markierung das erfindungsgemäße Verfahren in besonderem Maß eignet.

Darüber hinaus ist das erfindungsgemäße Verfahren auch gerade bei derartigen scheibenförmigen Markierungsträgern geeignet, die auf einer Seite der Scheibe z.B. eine Bedruckung, Beschriftung, Verspiegelung oder sonstigen angebrachten Hintergrund aufweisen, so dass keine Möglichkeit besteht, eine andersartige Kontrasterhöhung der Markierung zu einem Hintergrund, beispielsweise durch ein Hinterlegen des scheibenförmigen Markierungsträgers, zu erreichen. Mittels des erfindungsgemäßen Verfahrens ist es auch möglich, das notwendige UV-Licht in derartige behandelte Markierungsträger einzukoppeln, um so die Kontraststeigerung zu erreichen.

In einem besonderen Anwendungsfall des erfindungsgemäßen Verfahrens kann es somit vorgesehen sein, Markierungen in Glasscheiben zu lesen, die sich unter der zinnhaltigen Glasoberfläche, d.h. der Badseite, befinden und aus den vorgenannten silberpartikelhaltigen Markierungen bestehen bzw. diese zumindest umfassen. Neben den Markierungen im Glas, die sich durch Einlagerung und Partikelbildung von Metallionen und hier insbesondere Silberionen ergeben, können hierbei im Rahmen des erfindungsgemäßen Verfahrens auch Ablagerungen zur Kontraststeigerung eingesetzt werden, die bei dem Markierungsprozess auf der Glasoberfläche verbleiben, beispielsweise, wenn mittels eines Laserstrahls eine als lonenspendermedium dienende Folie durchleuchtet und hierbei die Folie zumindest teilweise verbrannt wird. Hierdurch ergeben sich Brandrückstände, welche die Markierung auf der Oberfläche des Glases nachzeichnen und somit ergänzend zur Kontraststeigerung im Rahmen des erfindungsgemäßen Verfahrens beitragen.

Auch ergibt sich durch diese Art der Herstellung einer Markierung eine unmittelbare metallische Ablagerung auf der Oberfläche, z.B. durch reines Silber aufgrund von Reduktion in der umgebenden Atmosphäre.

Wie eingangs erwähnt, kann zum Lesen bzw. Finden und/oder Erkennen einer Markierung, wie beispielsweise einem Datamatrixcode Typ 16 oder einer sonstigen Markierung auf einer Glasscheibe, eine Vorrichtung eingesetzt werden, die neben einer Lesevorrichtung auch eine Beleuchtungsvorrichtung aufweist, um die vorbeschriebene Kontraststeigerung zu erreichen.

In einer besonders bevorzugten Ausgestaltung einer Vorrichtung kann es dabei vorgesehen sein, dass diese Vorrichtung wenigstens einen Roilentransporttisch oder eine Rollentransportbahn umfasst, die zum Transport scheibenförmiger Markierungsträger und hier insbesondere Glasscheiben dient, wobei Lese- und Beleuchtungsvorrichtung an dem Rollentransporttischlder Rollentransportbahn angeordnet sind. Hierbei können beispielsweise eine Lese- und Beleuchtungsvorrichtung als eine bauliche Einheit ausgebildet sein.

Es besteht somit die Möglichkeit, an, in bzw. auf transparenten Markierungsträgern und hier insbesondere Glasscheiben angeordneten Markierungen maschinell zu lesen, wenn diese vermittels der Rollen transportiert werden. So kann hierfür beispielsweise wenigstens eine Beleuchtungs- und Lesevorrichtung zwischen zwei Rollen und/oder am Ende eines derartigen Rollenfiransporttisches bzw. einer derartigen Rollentransportbahn angeordnet sein. Ebenso besteht die Möglichkeit, mehrere Beleuchtungs- und Lesevorrichtungen vorzusehen, zum gleichzeitigen Lesen von Markierungen mehrerer Markierungsträger, da es üblich ist, auf einem derartigen Tisch bzw. einer derartigen Bahn zeitgleich neben- und hintereinander mehrere Markierungsträger, also z.B. Glasscheiben, zu transportieren.

So kann in einer besonders bevorzugten Ausführung der Vorrichtung eine Anordnung aus mehreren linear neben-/hintereinanderliegenden Lese-/Beleuchtungsvorrichtungen vorgesehen sein, die z.B. zwischen zwei Rollen oder an einem Tischbandende befestigbar ist, wobei die Anordnung als eine Leiste ausgebildet sein kann.

Ein Ausführungsbeispiel einer Vorrichtung zum Einsatz bei dem erfindungsgemäßen Verfahren ist in der folgenden Figur dargestellt.

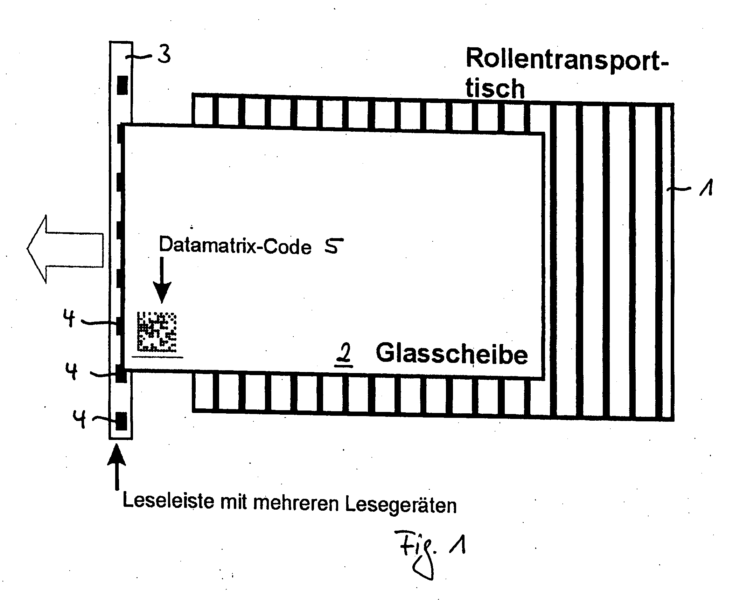

Die Figur 1 zeigt in Aufsicht einen Rollentisch 1, dessen Tischbreite variieren kann je nach Anwendungsfall. Vorliegend ist das Ausführungsbeispiel dergestalt, dass über den Tisch 1 eine Floatglasscheibe 2 transportiert wird. Eine solche Scheibe 2 kann z.B. erst später geteilt werden, wofür die Scheibe z.B. bereits die nötigen Anritzungen als Sollbruchstellen aufweisen kann. Hierbei kann es sich auch um mehrere nebeneinander angeordnete Reihen von Floatglasscheiben 2 handeln, deren Stirnseiten aneinander liegen.

Hier ist es vorgesehen, am linksseitigen Ende des Rollentisches 1 eine Leseleiste 3 anzuordnen, die mehrere einzelne bauliche Einheiten aus Beleuchtungs- und Lesevorrichtung 4 umfasst. Diese Lese- und Beleuchtungsvorrichtungen 4 sind hier in einem Abstand angeordnet, um Markierungen in, an oder auf den zu transportierenden Glasscheiben 2 zu lesen. Eine solche Markierungen ist hier exemplarisch als Datamatrix-Code 5 in der linken unteren Ecke dargestellt.

Die Leseleiste 3 ist derart angeordnet, dass die Markierungen 5, die sich auf der Unterseite bezogen auf die hier gegebene Darstellung der Glasscheiben 2 befinden, von unten gelesen werden können, wobei zumindest während des Lesevorgangs eine Beleuchtung der Glasscheiben mit Licht, bevorzugt UV-Licht stattfindet, um so zumindest zeitweise während des Lesevorgangs eine Kontraststeigerung der Markierung und hier insbesondere einer Silberpartikelmarkierung im Glas zu erreichen.

Es kann so mit Hilfe des erfindungsgemäßen Verfahrens und der erfindungsgemäßen Vorrichtung während eines Glasherstellungs- oder Behandlungsprozesses eine Überprüfung der Markierungen 5 stattfinden hinsichtlich verschiedener bzw. beliebiger Kriterien. Beispielsweise kann so festgestellt werden, ob eine Markierung 5 existent ist oder nicht bzw. es kann ein durch die Markierung 5 repräsentierter Code ausgelesen werden.

Das Ausführungsbeispiel ist nicht auf die vorbeschriebene Anordnung beschränkt, es können hingegen auch breitere Anordnungen des Tisches bzw. geringere Breiten bei den Glasscheiben zum Einsatz kommen, so dass mehrere Glasreihen nebeneinander in der Produktion abgefertigt werden können. Entsprechend der Anzahl der Glasscheibenreihen bzw. der Anzahl der nebeneinander über die Breite eines Tisches angeordneten Markierungen an, in oder auf dem Glas kann die Anzahl der Vorrichtungen zum Lesen und/oder Beleuchtung, insbesondere in der dafür vorgesehenen Leseleiste, am Tisch gewählt sein. Es können auch mehrere Vorrichtungen zum Lesen und/oder redundant vorgesehen sein, um eine Markierung auf einer Scheibe zu erfassen, deren Position nicht vorbestimmt ist. Hierdurch kann sichergestellt werden, dass eine Markierung zumindest von einer der Vorrichtungen erfasst werden kann.

Die einzelnen Lese-/Beleuchtungsvorrichtungen können in einer Anwendung untereinander vernetzt sein bzw. es kann ergänzend oder alternativ vorgesehen sein, dass die Informationen, die eine derartige Vorrichtung aus der Markierung gewinnt, automatisch weitergeleitet werden an ein Datenverarbeitungssystem, z.B. zur Steuerung des Produktions- oder Behandlungsprozesses.

Es ist darauf hinzuweisen, dass die Vorrichtung sowie das erfindungsgemäße Verfahren nicht auf das Einsatzgebiet bei Glasscheiben beschränkt ist, auch wenn diese Anwendung hier vorrangig beschrieben ist. Jegliche Art von Markierungsträger, kann mittels des erfindungsgemäßen Verfahrens bzw. der Vorrichtung auf Markierungen hin untersucht werden.

## Patentansprüche

1. Verfahren zum maschinellen Lesen von Markierungen auf/an/in transparenten, insbesondere scheibenförmigen Markierungsträgern, insbesondere Glasscheiben, **dadurch gekennzeichnet, dass** die Markierungen aus lasererzeugten Mikrorissen und/oder Metallpartikeln/Metallionen im Volumen des Markierungsträgers gebildet sind und zumindest während der Dauer eines maschinellen Lese- und Erkennungsvorgangs, insbesondere mittels einer Beleuchtungsvorrichtung (4), der Kontrast zwischen der Markierung (5), und dem Markierungsträger (2) durch Beleuchtung des Markierungsträgers mit UV-Licht erhöht wird.

2. Verfahren nach Anspruch 1, **dadurch gekennzeichnet, dass** UV-Licht über eine Fläche in den Markierungsträger (2) eingekoppelt wird, die im wesentlichen senkrecht angeordnet ist zu der Ebene in der sich die Markierung (5) in/an/auf dem Markierungsträger (2) befindet.

3. Verfahren nach Anspruch 2, **dadurch gekennzeichnet, dass** die Fläche gebildet wird durch eine Stirnseite eines scheibenförmigen Markierungsträgers (2), insbesondere einer Glasscheibe (2).

4. Verfahren nach einem der Ansprüche 2 oder 3, **dadurch gekennzeichnet, dass** der Ort der Einkopplung des UV-Lichtes von der Markierung (5) einen Abstand aufweist, der geringer ist, als die Absorptionslänge des Materials des Markierungsträgers (2) bei der verwendeten Wellenlänge des UV-Lichtes.

5. Verfahren nach einem der Ansprüche 2 bis 4, **dadurch gekennzeichnet, dass** durch das UV-Licht das Material des Markierungsträgers (2) in der Umgebung der Markierung (5) zur Fluoreszenz angeregt wird, so dass die nicht, oder zumindest unwesentlich fluoreszierende Markierung (5) sich dunkel vor hell fluoreszierendem Hintergrund abhebt.

6. Verfahren nach Anspruch 1, **dadurch gekennzeichnet, dass** UV-Licht über eine Fläche in den Markierungsträger (2) eingekoppelt wird, die im wesentlichen parallel angeordnet ist zu der Ebene in der sich die Markierung in/an/auf dem Markierungsträger (2) befindet.

7. Verfahren nach Anspruch 6, **dadurch gekennzeichnet, dass** die Fläche gebildet wird durch die Scheibenfläche eines scheibenförmigen Markierungsträgers (2), insbesondere einer Glasscheibe (2).

8. Verfahren nach einem der Ansprüche 6 bis 7, **dadurch gekennzeichnet, dass** durch das UV-Licht das Material des Markierungsträgers (2) in einem Abstand zur Markierung zur Fluoreszenz angeregt wird, so dass die Umgebung der Markierung (5) nicht fluoresziert und die Markierung (5) durch sich in dem Markierungsträger (2), insbesondere durch Totalreflexion ausbreitendes Fluoreszenzlicht beleuchtet wird.

9. Verfahren nach einem der Ansprüche 6 bis 8, **dadurch gekennzeichnet, dass** die Markierung (5) eine Störstelle im Markierungsträger (2) darstellt, an der das Fluoreszenzlicht aus dem Markierungsträger (2) auskoppelt, so dass die Markierung (5) hell auf dunklem Hintergrund erscheint.

10. Verfahren nach einem der vorherigen Ansprüche, **dadurch gekennzeichnet, dass** während eines Lesevorganges zumindest die Umgebung einer Markierung (5) von Umgebungslicht abgeschirmt ist, insbesondere wobei die Abschirmung durch die Lesevorrichtung (4) selbst erfolgt.

11. Verfahren nach einem der vorherigen Ansprüche, **dadurch gekennzeichnet, dass** das UV-Licht eine Wellenlänge im Bereich von 240 bis 280 Nanometern aufweist.

12. Verfahren nach einem der vorherigen Ansprüche, **dadurch gekennzeichnet, dass** eine Markierung (5) im Volumen eines Markierungsträgers (2) gebildet ist durch Silberpartikel und/oder Silberionen.

13. Verfahren nach einem der vorherigen Ansprüche, **dadurch gekennzeichnet, dass** eine weitere Kontraststeigerung durch Ablagerungen erfolgt, die auf einer Glasoberfläche verbleiben, wenn mittels eines Laserstrahls eine als lonenspendermedium dienende Folie durchleuchtet und hierbei zumindest teilweise verbrannt wird.

## Claims

1. Method for the mechanical reading of marks on or in transparent mark-carriers, especially plate-like mark-carriers and in particular glass panes, **characterized in that** the marks are formed from laser-generated microcracks and/or metal particles or metal ions within the body of the mark-carrier, and, at least for the duration of a mechanical reading and recognition pass, in particular by means of an illumination device (4), the contrast between mark (5) and mark-carrier (2) is heightened by illuminating the mark-carrier with ultraviolet light.

2. Method according to Claim 1, **characterized in that** ultraviolet light is coupled into the mark-carrier (2) through a face disposed substantially perpendicularly to the plane in which the mark (5) in or on the mark-carrier (2) is located.

3. Method according to Claim 2, **characterized in that** the face is formed by an end face of a plate-like mark-carrier (2) and in particular of a glass pane (2).

4. Method according to either of Claims 2 and 3, **characterized in that** the point at which the ultraviolet light is coupled in is located at a distance from the mark (5) that is smaller than the absorption length of the material of the mark-carrier (2) for the adopted wavelength of ultraviolet light.

5. Method according to any one of Claims 2 to 4, **characterized in that** the material of the mark-carrier (2) is excited to fluorescence by the ultraviolet light in the area surrounding the mark (5) so that the non-fluorescing (or at best insignificantly fluorescing) mark (5) stands out darkly against a brightly fluorescing background.

6. Method according to Claim 1, **characterized in that** ultraviolet light is coupled into the mark-carrier (2) through a face disposed substantially parallel with the plane in which the mark in or on the mark-carrier (2) is located.

7. Method according to Claim 6, **characterized in that** the face is formed by the major face of a plate-like mark-carrier (2) and in particular of a glass pane (2).

8. Method according to either of Claims 6 and 7, **characterized in that** the material of the mark-carrier (2) is excited to fluorescence by the ultraviolet light at a distance from the mark so that the area surrounding the mark (5) does not fluoresce and the mark (5) is illuminated by fluorescent light propagated within the mark-carrier (2), in particular through total reflection.

9. Method according to any one of Claims 6 to 8, **characterized in that** the mark (5) constitutes an impurity in the mark-carrier (2) at which the fluorescent light couples out from the mark-carrier (2) so that the mark (5) appears bright against a dark background.

10. Method according to any one of the preceding claims, **characterized in that** at least the area surrounding a mark (5) is screened from ambient light during a reading pass, such screening being provided in particular by the reading device (4) itself.

11. Method according to any one of the preceding claims, **characterized in that** the ultraviolet light has a wavelength in the 240 to 280 nanometre range.

12. Method according to any one of the preceding claims, **characterized in that** a mark (5) is formed in the body of a mark-carrier (2) by silver particles and/or silver ions.

13. Method according to any one of the preceding claims, **characterized in that** a further increase in contrast results from deposits left on a glass surface when a foil serving as ion-dispensing medium is transilluminated by a laser beam and thereby at least partially burnt.

## Revendications

1. Procédé pour la lecture mécanique de marquages sur/contre/dans des supports de marquage transparents, en particulier en forme de plaques, en particulier des vitres, **caractérisé en ce que** les marquages sont formés par des microfissures, générées par laser, et/ou des particules métalliques ou ions métalliques dans le volume du support de marquage, et, au moins pendant la durée d'un processus de lecture et de détection mécanique, en particulier au moyen d'un dispositif d'éclairage (4), le contact entre le marquage (5) et le support de marquage (2) est augmenté sous l'effet de l'éclairage du support de marquage avec une lumière ultraviolette.

2. Procédé selon la revendication 1, **caractérisé en ce que** la lumière ultraviolette est injectée dans le support de marquage (2) par l'intermédiaire d'une surface qui est disposée sensiblement perpendiculairement au plan dans lequel se situe le marquage (5) dans/contre/sur le support de marquage (2).

3. Procédé selon la revendication 2, **caractérisé en ce que** ladite surface est formée par une face frontale d'un support de marquage (2) en forme de plaque, en particulier une vitre (2).

4. Procédé selon la revendication 2 ou 3, **caractérisé en ce que** le lieu d'injection de la lumière ultraviolette est situé par rapport au marquage (5) à une distance qui est inférieure à la longueur d'absorption du matériau du support de marquage (2) avec la longueur d'onde utilisée de la lumière ultraviolette.

5. Procédé selon l'une quelconque des revendications 2 à 4, **caractérisé en ce que** sous l'effet de la lumière ultraviolette, le matériau du support de marquage (2) dans l'environnement du marquage (5) est activé pour devenir fluorescent, de telle sorte que le marquage (5) non fluorescent ou du moins peu fluorescent se détache en sombre devant l'arrière-plan fluorescent clair.

6. Procédé selon la revendication 1, **caractérisé en ce que** la lumière ultraviolette est injectée dans le support de marquage (2) par l'intermédiaire d'une surface qui est disposée sensiblement parallèlement au plan dans lequel se situe le marquage (5) dans/contre/sur le support de marquage (2).

7. Procédé selon la revendication 6, **caractérisé en ce que** ladite surface est formée par la face d'un support de marquage (2) en forme de plaque, en particulier une vitre (2).

8. Procédé selon l'une quelconque des revendications 6 à 7, **caractérisé en ce que** sous l'effet de la lumière ultraviolette, le matériau du support de marquage (2) est activé à une distance par rapport au marquage pour devenir fluorescent, de telle sorte que l'environnement du marquage (5) n'est pas fluorescent et le marquage (5) est éclairé par la lumière fluorescente qui se propage dans le support de marquage (2), en particulier par réflexion totale.

9. Procédé selon l'une quelconque des revendications 6 à 8, **caractérisé en ce que** le marquage (5) constitue une zone de perturbation dans le support de marquage (2), sur laquelle la lumière fluorescente est projetée hors du support de marquage (2) de telle sorte que le marquage (5) apparaît clair sur l'arrière-plan obscur.

10. Procédé selon l'une quelconque des revendications précédentes, **caractérisé en ce que** pendant un procédé de lecture, au moins l'environnement d'un marquage (5) est protégé par la lumière environnante, en particulier la protection étant produite par le dispositif de lecture (4) lui-même.

11. Procédé selon l'une quelconque des revendications précédentes, **caractérisé en ce que** la lumière ultraviolette possède une longueur d'onde dans la plage de 240 à 280 nanomètres.

12. Procédé selon l'une quelconque des revendications précédentes, **caractérisé en ce qu'**un marquage (5) est formé par des particules d'argent et/ou des ions d'argent dans le volume d'un support de marquage (2).

13. Procédé selon l'une quelconque des revendications précédentes, **caractérisé en ce qu'**une augmentation supplémentaire du contraste est générée par des dépôts qui subsistent sur la surface du verre, lorsqu'un film, formant un milieu de distribution d'ions, est traversé par un rayon laser et, à cette occasion, est consumé au moins en partie.
